(19) Europäisches Patentamt
European Patent Office
Office européen des brevets

(11) EP 1 128 613 A2

(12) EUROPEAN PATENT APPLICATION

(43) Date of publication:
29.08.2001 Bulletin 2001/35

(51) Int Cl.7: H04L 12/56

(21) Application number: 01300124.3

(22) Date of filing: 08.01.2001

(84) Designated Contracting States:
AT BE CH CY DE DK ES FI FR GB GR IE IT LI LU MC NL PT SE TR
Designated Extension States:
AL LT LV MK RO SI

(30) Priority: 18.01.2000 US 484097

(71) Applicant: LUCENT TECHNOLOGIES INC.
Murray Hill, New Jersey 07974-0636 (US)

(72) Inventors:
- Gasman, Charles Robert
  Hightstown, New Jersey 08520 (US)
- Hossain, Ashfaq
  Berkeley Heights, New Jersey 07922 (US)
- Royer, Randolph
  North Plainfield, New Jersey 07063 (US)
- Shu, Houshing Frank
  Basking Ridge, New Jersey 07920 (US)

(74) Representative:
Watts, Christopher Malcolm Kelway, Dr. et al
Lucent Technologies (UK) Ltd,
5 Mornington Road
Woodford Green Essex, IG8 0TU (GB)

# (54) Method and apparatus for load balancing of network services

(57) A network server system for processing client requests received over a communication network includes a server farm having a number of servers. A load management switch or other network element is coupled between a set of clients and the server farm, and processes client requests for network services so as to implement a desired load balancing policy. The switch collects server statistics regarding, e.g., type of connections being serviced, delivered throughput, response time and number of active connections for each of the servers. The value of an objective function is then determined for each of the servers based on the collected statistics, and a particular one of the servers is selected for servicing one or more client requests based on the computed values of the objective function. Each of the servers may have associated therewith a unique Internet Protocol (IP) address and a common shared IP address corresponding to an advertised address of the server farm. The switch may be configured such that packets corresponding to the client requests are directed to particular servers without any modification of the IP addresses in the packets. For example, the packets may be routed by altering a local network address of a packet, such as an Ethernet media access control (MAC) address of a packet, so as to allow the packet to be delivered to a selected one of the servers.

FIG. 1

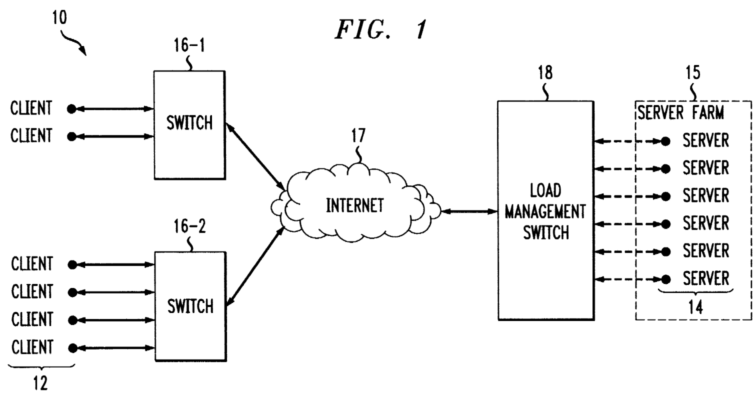




Printed by Jouve, 75001 PARIS (FR)

## Description

### Field Of The Invention

The present invention relates generally to computer networks such as the Internet, and more particularly to load balancing techniques for use in distributing client requests across multiple servers in such networks.

### Background Of The Invention

A number of different load balancing techniques have been developed in an attempt to improve the response time of web servers, as well as to provide high reliability and high availability Transmission Control Protocol (TCP)/ Internet Protocol (IP) based systems to support applications such as long distance voice communication and multimedia traffic distribution. Such techniques generally operate in conjunction with a group of related servers, also referred to as a server farm, and attempt to distribute received requests across the multiple servers such that overall response times are minimized. Although each of the individual servers generally has unique IP and Media Access Control (MAC) addresses, a single IP address for the server farm as a whole may be advertised to clients. Client requests directed to this single address are received by a device associated with the server farm, such as a load management switch, and distributed to the various servers in accordance with a specified load balancing technique.

Examples of conventional load balancing techniques are described in, e.g., B. Narendran, S. Rangarajan and S. Yajnik, "Data Distribution Algorithms for Load Balanced Fault-Tolerant Web Access," Proceedings of the 16th IEEE Symposium on Reliable Distributed Systems, SRDS '97, 1997; O.P. Damani, P.-Y. Chung, Y. Huang, C. Kantala and Y.M. Wang, "ONE-IP: Techniques For Hosting A Service On A Cluster Of Machines," Proceedings of 6th International WWW Conference, Santa Clara, April 1997. Further description regarding these techniques can be found in US-A-6070 191 and EP-A- 0 865 180 respectively.

Although these techniques can provide substantial performance advantages over previous approaches, these and other techniques may in some circumstances have difficulty achieving a desired level of performance. For example, the use of a conventional approach such as round-robin assignment of client requests to servers often will not achieve an optimal load balancing solution. This is due at least in part to the fact that round robin and other conventional assignment techniques generally fail to differentiate short sessions, such as those associated with Domain Name Server (DNS), Simple Mail Transfer Protocol (SMTP), Simple Network Management Protocol (SNMP) queries, from longer sessions, such as those associated with Hypertext Transfer Protocol (HTTP), File Transfer Protocol (FTP), Telnet, and multi-media data. For example, if the traffic has a cyclic pattern with a short session, short session, and long session in sequence, the third assigned server and every third server assigned thereafter may be quickly overwhelmed.

Another significant problem with conventional load balancing techniques is that such techniques generally fail to take into consideration the effects of non-TCP traffic. For example, if the overall traffic associated with the server farm is such that non-TCP traffic is particularly heavy on a certain server, and the load balancing technique ignores this fact, the TCP traffic on this server may suffer an unduly long delay, and could be better serviced on other underutilized servers.

### Summary Of The Invention

The invention provides improved techniques for processing client requests received over the Internet and other communication networks, without the problems associated with the above-described conventional techniques.

In accordance with the invention, a network server system for processing client requests received over a communication network includes a server farm having a number of servers. A load management switch or other network element is coupled between a set of clients and the server farm, and processes client requests for network services so as to implement a desired load balancing policy. The switch collects server statistics regarding, e.g., type of connections being serviced, delivered throughput, response time and number of active connections for each of the servers. The value of an objective function is then determined for each of the servers based on the collected statistics, and a particular one of the servers is selected for servicing one or more client requests based on the computed values of the objective function.

The objective function values may be computed at predetermined intervals, such that a server selected based on the values of the objective function for the interval is used to service client requests received during that interval. As another example, the objective function values may be computed for each client request, such that each of the requests may be directed to a different one of the servers.

In accordance with another aspect of the invention, each of the servers may have associated therewith a unique Internet Protocol (IP) address and a common shared IP address corresponding to an advertised address of

the server farm. In addition, the switch may be configured such that packets corresponding to the client requests are directed to particular servers without any modification of the IP addresses in the packets. For example, the packets may be routed by altering a local network address of a packet, such as an Ethernet media access control (MAC) address of a packet, so as to allow the packet to be delivered to a selected one of the servers.

In accordance with another aspect of the invention, the objective function may be configured to include multiple terms, each having a particular dynamic weighting coefficient applied thereto, such that different load balancing policies can be implemented by adjusting the values of the dynamic weighting coefficients.

Advantageously, the invention allows client requests to be distributed among the servers of a server farm in a more efficient manner and with greater flexibility than is possible using the previously-described conventional techniques. For example, by utilizing an objective function which incorporates statistics based on the type of connections being serviced by particular servers, the invention avoids the problems associated with assignment of multiple long sessions to the same server.

## Brief Description Of The Drawings

FIG. 1 is a block diagram illustrating an exemplary network server system in which the present invention may be implemented;

FIG. 2 illustrates an address translation process in the FIG. 1 system;

FIG. 3 is a flow diagram illustrating an exemplary load balancing process implemented in a load management switch of the FIG. 1 system;

FIG. 4 shows examples of the traffic statistics that may be utilized in the load balancing process of FIG. 3;

FIG. 5 shows an example of a network server system which is used to demonstrate a load balancing process in accordance with the invention; and

FIG. 6 shows an example of a load management switch in which the invention may be implemented.

## Detailed Description Of The Invention

The present invention will be illustrated below in conjunction with exemplary network systems in which client/server connections established over the Internet using the Transmission Control Protocol/Internet Protocol (TCP/IP) standard. It should be understood, however, that the invention is not limited to use with any particular type of network system or network communication protocol. The term "client request" refers to any communication from a client which includes a request for information from a server. A given request may include multiple packets or only a single packet, depending on the nature of the request. Examples of "information" that may be requested include web pages, portions of web pages, computer files, or any other type of data including audio, video and image data, as well as combinations or portions thereof.

FIG. 1 shows an exemplary network system 10 in which the present invention may be implemented. The system 10 includes a set of clients 12 and a set of servers 14. The servers 14 are grouped together in a server farm 15. The clients 12 communicate with the servers 14 via switches 16-1 and 16-2, Internet 17, and a load management switch 18. The clients 12 communicate with the servers 14 over TCP/IP connections established in a conventional manner. One or more of the elements of system 10 may include a processor and a memory. For example, the clients 12, servers 14 and load management switch 18 may be implemented as stand-alone or networked computers, or as portions or combinations of these and other processor-based devices.

The system 10 is suitable for implementing, e.g., Hypertext Transfer Protocol (HTTP)-based network services accessed by the clients 12 over the Internet 17. The HTTP protocol is described in greater detail in "Hypertext Transfer Protocol -- HTTP/1.0," Network Working Group, May 1996, <http://www.ics.uci.edu/pub/ietf/http>, which is incorporated by reference herein. For example, a given one of the clients 12 may generate an HTTP request for a particular service hosted by the server farm 15, such as a request for information associated with a particular web site, and a TCP/IP connection is then established between the client and a particular one of the servers 14 in the server farm 15.

The system 10 can also support numerous other types of network services, including, e.g., services associated with File Transfer Protocol (FTP), Telnet (a well-known protocol for creating a connection with a remote server), multimedia data transfer, Simple Mail Transfer Protocol (SMTP), Simple Network Management Protocol (SNMP), etc.

The requested network service may be designated by a uniform resource locator (URL) which includes a domain name identifying the server farm 15. The load management switch 18 receives client requests directed to the server farm 15, and applies a specified load balancing technique to select a particular one of the servers of the server farm 15 to process the request.

The present invention provides improved load balancing techniques which overcome the problems associated with the previously-described conventional techniques. In the illustrative embodiment of the invention, load balancing techniques in accordance with the invention are implemented in the load management switch 18 of system 10. These load balancing techniques will be described in greater detail below with reference to FIGS. 3, 4, 5 and 6.

The load management switch 18 in the illustrative embodiment may be implemented as, e.g., an Ethernet switch or other type of data switch suitable for use in the particular network application. An example of a switch suitable for use as load management switch 18 is the Cajun P550 Gigabit Ethernet Switch, from Lucent Technologies Inc. of Murray Hill, New Jersey. A switch of this type will be described in greater detail below in conjunction with FIG. 6. It should be emphasized that this particular switch type is only an example, and other types of switches or network devices can also be used to implement the load balancing techniques of the invention.

FIG. 2 illustrates the address translation operations performed by the load management switch 18 in the illustrative embodiment. It is assumed for purposes of this example that the switch 18 is coupled to the server farm 15 via a local area network (LAN).

A given packet 20 arriving at the load management switch 18 includes an Ethernet Media Access Control (MAC) Layer address portion 20-1, an IP packet portion 20-2, and an Ethernet Checksum portion 20-3. The address translation operation performed by the load management switch 18 in this embodiment results in a translated packet 22 which includes Ethernet MAC Layer address portion 22-1, IP packet portion 22-2, and Ethernet Checksum portion 22-3. The Ethernet MAC Layer address portion 22-1 represents a translated version of the corresponding Ethernet MAC Layer address portion 20-1 of the untranslated packet 20. The translated Ethernet MAC Layer address portion 22-1 represents the address of a particular one of the servers 14 on a server farm LAN 24. The IP packet portion 21-2 is the same as the IP packet portion 20-2 of the untranslated packet, i.e., this portion is unchanged as a result of the address translation performed in the load management switch 18. The Ethernet Checksum portion 22-3 represents a recalculated version of the corresponding Ethernet Checksum portion 20-3 of the untranslated packet 20.

In summary, the address translation operations shown in FIG. 2 translate the Ethernet MAC Layer address and Checksum portions of the packet 20 in order to direct the packet to a particular one of the servers 14 in the server farm 15, at its corresponding address on the server farm LAN 24. The particular one of the servers 14 selected to receive a given packet is determined in accordance with the load balancing techniques of the invention, prior to performance of the above-described address translation operations.

The address translation operations shown in FIG. 2 are bi-directional, i.e., are performed in a similar manner in the reverse direction when an outgoing packet is received in the switch 18 from the server farm 15.

It should be noted that the particular configuration and address translation operations of switch 18 as illustrated in FIG. 2 are by way of example only. In other embodiments, one or more of the servers 14 may each be connected to a corresponding port or ports of the switch 18, rather than connected to a LAN as in the illustrative embodiment of FIG. 2.

The load balancing techniques of the present invention will now be described in greater detail. As previously noted, these techniques in the illustrative embodiment are implemented by the load management switch 18 in order to select a particular one of the servers 14 to service a particular request or set of requests received in the load management switch 18 from one or more of the clients 12.

In accordance with the invention, the load balancing techniques implemented in the illustrative embodiment are based on an objective function that corresponds to a measure of load differences among all the servers in the server farm. The factors in the objective function may be weighted to suit a selected load balancing policy. Any limitations mandated by the policy can be taken into consideration in the form of constraints in optimization of the objective function.

FIG. 3 is a flow diagram illustrating the general load balancing process in the illustrative embodiment of the invention. In step 30, statistics are collected for each of the servers 14 in the server farm 15. Examples of these statistics are shown in FIG. 4, and include number of active connections 40, delivered throughput 42, response time 44, and connection type 46. These statistics may be collected using a server status thread, e.g., a routine or other program which is configured in a straightforward manner to collect the desired status information for a particular period of time. A statistics table may be maintained in the load management switch 18 for storing the statistics of each server for the particular time period.

The number of active connections 40 indicates the total number of connections being serviced by the corresponding server at the end of the last time period. It should be noted that this statistic does not give any indication of the type or persistence of the connections. The delivered throughput 42 is the total quantity of data bytes transferred to the clients 12 by the server during the last time period. This statistic provides information regarding the volume of the load on the server. The response time 44 is the time taken by the server to actually respond to a new incoming

request, i.e., the time from receipt of the request packet to transmission of the first response packet in the reverse direction. The connection type 46 indicates the different types of connections to the server in the particular time period, e.g., HTTP, FTP, SNMP, SMTP, etc. The statistics shown in FIG. 4 may be collected continually for each of the servers 14, or at specified periodic intervals.

The server status thread used to collect the statistics may also be configured to prevent any failed servers in the server farm from being selected for future incoming requests until the situation is corrected. Failed servers can be identified in a straightforward manner, e.g., by the switch sending simple "ping" requests to a particular server which exhibits a response time that exceeds a certain established threshold, so as to determine whether the server is in fact in a failure mode.

Referring again to FIG. 3, a set of weighting factors is determined in step 32 for each of the categories of statistics. These weighting factors may be varied depending on the type of traffic in a given load balancing application, so as to alter the importance of a particular term in the objective function to better represent different types of traffic. For example, the load management switch 18 may store a different set of weights for each of a number of different specialized traffic sessions supported by the system, in addition to a general set of weights for handling generic data sessions such as HTTP sessions.

The value of an objective function is then computed in step 34 for each of the servers in the server farm. In order to reduce computational complexity, the value of the objective function for each of the servers may be computed, e.g., at the beginning or end of a specified time interval. This interval may be adjusted based on factors such as the traffic load. It is also possible that the objective function values can be computed for every new incoming request, so as to provide more granularity in load management. For a given request, the server having the smallest objective function value, i.e., the server which minimizes the objective function, is selected in step 36 for servicing that request.

The FIG. 3 process, although illustrated for a case in which a particular server is selected for processing a single incoming client request, can be readily adapted to determine multiple servers for handling multiple requests. For example, if there are five requests to be handled, the process can select the five servers having the five smallest objective function values. The requests can be assigned to the selected servers randomly, or using any other suitable technique.

As will be described in greater detail below, the load balancing process of the present invention thus considers not only the incoming traffic pattern, but also the current existing load on each server and the link status to each server. Conventional procedures for handling malfunctioning links may be used in conjunction with the invention. Such techniques are well known in the art and therefore not described in detail herein.

In the illustrative embodiment, the incoming traffic pattern may be analyzed, e.g., by examining the port number in the TCP header of a given packet in order to determine if the corresponding session is short or long. For example, port 23 is generally used for a Telnet connection and port 80 is typically used for HTTP connections, both of which correspond to long sessions. Such information corresponds generally to the connection type statistic 46 previously described in conjunction with FIG. 4.

The current load for a given server may be analyzed by determining a response time statistic 44 such as round trip time (RTT) between the load management switch 18 and that server. In this manner, RTTs for each of the servers in the server farm can be compared with a benchmark or average RTT value in order to determine the most responsive server. RTT can be recorded by the load management switch 18 in the following manner. First, the switch time stamps a TCP "open request" packet by detecting a particular type of identifier associated therewith, such as a SYN bit. Next, the switch detects and coordinates the TCP "open confirm" packet with the associated TCP open request packet. The switch then calculates the time duration and records it as RTT($k$) for the server $k$. Other techniques, such as using pre-defined probe packets to make the RTT measurements, may also be used.

Current load can also be analyzed by estimating the delivered throughput statistic 42, e.g., by counting the number of bytes transmitted by a given server. Also indicative of current load is the number of active connections statistic 40, e.g., the number of established TCP connections. Other indicators of current load include, e.g., actual session duration, although inactive time during a session can render such an indicator less reliable that those described previously.

An example of an objective function that may be used in step 34 of the load balancing process in the illustrative embodiment of the invention is as follows. The objective function minimization process in this example attempts to determine the $j$ that optimizes:

$$Sum(j) = D^{*}\sum_{k \neq j} n(j) + 1 - n(k)\big| + D^{*} \sum_{p \neq q \neq j \forall p,q} \big|n(p) - n(q)\big|$$

$$+C1^{*}\sum_{k \neq j}\big|RTT(j) + AVRT - RTT(k)\big| + C1^{*} \sum_{p \neq q \neq j \forall p,q} \big|RTT(p) - RTT(q)\big|$$

$$+C2^{*}\sum_{j \neq k}\big|NB(j) + AVRT - NB(k)\big| + C2^{*} \sum_{p \neq q \neq j \forall p,q} \big|NB(p) - NB(q)\big|$$

$$+C3^{*}\sum_{j \neq k}\big|RPS(j) + AVRPS - RPS(k)\big| + C3^{*} \sum_{p \neq q \neq j \forall p,q} \big|RPS(p) - RPS(q)\big|$$

where:

*j* is the index of the server under consideration;

*k* is the index of all the servers other than server *j*;

*n*(*k*) is the count of open TCP sessions on server *k*, as recorded by the load management switch 18 for server *k*;

*N* is the sum of all the *n*(*j*) counts;

RTT(*k*) is the measured round trip time for setting up a TCP connection between the load management switch 18 and the server *k*, as recorded by the load management switch 18 for server *k* in the manner previously described;

NB(*k*) is the measured number of bytes transferred to and from server *k*, as recorded by the load management switch 18 for the physical port connecting switch 18 and server *k* in the illustrative embodiment;

RPS(*k*) is the count of TCP connection requests arriving at server *k* during the time period between two consecutive sets of RTT and NB measurements;

AVRTT is the average RTT;

AVNB is the average NB; and

AVRPS is the average RPS.

In the above example, the following simplifying assumptions are made. All servers are assumed to have identical capability. The load management switch 18 is activated only when there is at least one incoming TCP request. Once the data flow of a session is established between a client and a server, all future data flows are not to be altered until this session is over. If the end of session cannot be determined, e.g., a so-called FIN bit cannot be detected, the dataflows are not to be altered until a specific timer is expired. It should be understood that these assumptions are made in order to simplify the description of the illustrative embodiment, and are not to be construed as limiting the scope of the invention in any way.

The objective function given above includes four distinct terms, each corresponding to a line of the function. The first term of the objective function attempts to balance the number of TCP connections among all the servers. The second term minimizes the differences among all the RTTs. The third term minimizes the differences of input and output bytes among all the servers. In general, the server selection should be configured so as to avoid a server that is experiencing heavy input/output (I/O) activities such as large file transfers. The fourth term of the objective function minimizes the differences of assigned TCP connections among the servers. This tends to distribute the incoming traffic evenly. The coefficients D, C1, C2, and C3 are positive weighting coefficients, which allow, e.g., adjustment of the objective function to achieve a particular load balancing strategy.

All the data points required to compute the value of the objective function a given point in time are available through measurement, in the manner previously described. Since measurements are at the expenses of packet processing performance, the load management switch 18 may be used to record the required data as packets are passing therethrough. This is done to reduce the traffic to the servers and the demand on computational resources. Probe packets are utilized only when necessary.

The goal of the load management switch 18 in the illustrative embodiment is to make all of the servers 14 appear identical to each other in terms of the above-defined parameters. When the weighting coefficient D is set to one and the C1, C2 and C3 coefficients are set to zero, the load balancing process reduces to distribution of a given request to the server with the least number of open TCP connections. If the weighting coefficient C3 is set to one and coefficients C1, C2, and D are set to zero, the load distribution process is similar to a round-robin distribution process.

A special case of a load balancing process implemented using the example objective function given above will now be described in greater detail. In this special case, the total number of TCP connections, N, is used in this process as an indicator of the established incoming traffic, but not as a factor to be evenly distributed among the servers. Therefore, the weighting coefficient D is set to zero. To further simplify the description of this special case, the weighting coefficient C3 is also set to zero.

Since the RTT is the primary factor to be optimized in this special case, it shall be considered first. When the incoming traffic is non-increasing and the I/O activities are increasing, the traffic is directed so as to balance the I/O activities. Since the C1 and C2 terms of the objective function are considered in sequence, both C1 and C2 can be set to one.

When a new session packet arrives and it is ready to be directed to a server, the following steps are used by the load management switch 18.

1. For every server *j*, calculate the RTT difference from the other servers. More specifically, calculate the term SumRTT(*j*) as follows:

$$\sum_{k\neq j}\left|RTT(j)-RTT(k)\right|+p\sum_{p\neq q\neq j\forall,q}\left|RTT(p)-RTT(q)\right|$$

2. Find the server with the smallest SumRTT value. If there is a tie between servers found in this step, pick the one found first.

3. Compare the current RTT, NB and N values with the ones measured previously, e.g., for the previous time period. The result is one of the eight cases tabulated below:

| Case | RTT | NB | N |
|---|---|---|---|
| 1 | Increase | Increase | Increase |
| 2 | Increase | Increase | Decrease |
| 3 | Increase | Decrease | Decrease |
| 4 | Decrease | Decrease | Decrease |
| 5 | Decrease | Decrease | Increase |
| 6 | Decrease | Increase | Increase |
| 7 | Decrease | Increase | Decrease |
| 8 | Increase | Decrease | Increase |

4. If (current AVRTT > previous AVRTT) and (current N ≤ previous N) and (current AVNB > previous AVNB) /* Case 2 */ OR if ( current AVRTT ≤ previous AVRTT) and (current N ≤ previous N) and (current AVNB > previous AVNB) /* Case 7 */, then use the following steps to find the server to which the session traffic should be directed:

4.1 For every server, calculate the NB difference relative to the other servers. More specifically, calculate the term SumNB as follows:

$$\sum_{j \neq k} \left| NB(j) - NB(k) \right| + \sum_{p \neq q \neq j \forall p,q} \left| NB(p) - NB(q) \right|$$

4.2 Find the server with the smallest SumNB. If there is a tie between servers found in this step, pick the one found first.

4.3 Direct the session traffic to the server found in step 4.2. Go back to step 1.

5. If (current AVRTT > previous AVRTT) and (current N ≤ previous N) and (current AVNB ≤ previous AVNB) then use the following steps to find the server and direct session traffic to it. /* Case 3 */:

5.1 Send probes to check the link status.

5.2 If the link has failed, report failure and go back to step 1.

5.3 Send probes to record RTT for each server. Go back to step 1.

6. For all other cases (five in total), direct session traffic to the selected server. Go back to step 1.

An alternative implementation of the load balancing process of the present invention will now be described. It will be assumed for this portion of the description that the load management switch 18 includes one or more ingress ports and one or more egress ports, with the ingress port(s) coupled to the clients and the egress port(s) coupled to the servers. It will further be assumed that the load management switch 18 takes in one client request at a time via an ingress port and uses the process described in conjunction with FIG. 3 to determine the optimal server for processing this request.

In accordance with this alternative implementation of the process, the RTT and NB of each server are measured by the load management switch 18 in a pre-defined time interval. These measurements are used by the load management switch 18 to select a server for all TCP requests from all ingress ports during this pre-defined period. In order to avoid selecting the same server for the consecutive TCP requests, the RPS will generally have to be updated in real time. In addition, the selection process cannot use the SumRTT and SumNB in sequence as in the previously-described six-step process, since otherwise the traffic will be always directed to the same server before the next measurements are made. Therefore, the load management switch 18 in this implementation takes SumRTT, SumNB, and SumRPS into consideration at the same time and the objective function is configured to include the second, third, and fourth groups in the original Sum(*j*) described above.
This optimization problem can be formulated as follows:

$$\text{Minimize } C1^{*} \text{ SumRTT(j)}^{*} \text{ x (j)} + C2^{*} \text{ SumNB(j)}^{*} \text{ x(j)} + C3^{*} \text{ SumRPS(j)}^{*} \text{ x(j)}$$

Subject to:

$$\text{SumRTT(j)} = \sum_{k \neq j} \left| RTT(j) - RTT(k) \right| + \sum_{p \neq q \neq j \forall p,q} \left| RTT(p) - RTT(q) \right|$$

$$\text{SumNB(j)} = \sum_{j \neq k} \left| NB(j) - NB(k) \right| + \sum_{p \neq q \neq j \forall p,q} \left| NB(p) - NB(q) \right|$$

$$\text{SumRPS (j)} = \sum_{j \neq k} \left| RPS(j) - RPS(k) \right| + \sum_{p \neq q \neq j \forall p,q} \left| RPS(p) - RPS(q) \right|$$

$\Sigma x(j) = 1$ for all values of *j*, and all $x(j)$ can either be 0 or 1.

This represents a zero or one integer programming problem that can be solved as follows. First, calculate the sum of SumRTT(*j*), SumNB(*j*), and SumRPS(*j*) from the measurement data for each *j*. Then select the *j* that achieves the smallest objective function. he server *j* is the one selected to receive the TCP request. The weighting coefficients C1, C2 and C3 may be determined experimentally.

When the servers are initially brought on-line and the load management switch 18 is first invoked to distribute the load, one can set C3 to one and set C1 and C2 to zero. These assignments make the initial load distribution similar to that of the conventional round robin method. After the servers and the load management switch 18 reach a steady state and all the measurements are in place, one can have the load management switch 18 automatically transition over to a set of pre-selected values for C1, C2 and C3.

As noted above, it was assumed for this description that the load management switch 18 takes in one request at a time and uses the measurements to find the optimal server for this request. However, the invention can also be implemented such that the switch takes in multiple requests during a given period and uses the measurements to determine simultaneously multiple servers for handling these requests. In such an arrangement, the above-noted zero or one integer programming problem becomes a regular integer programming problem and the RPS(*j*) terms become variables at the disposal of the load management switch 18. Therefore, when the optimal solution is reached, the load management switch 18 distributes RPS(*j*) requests to the server *j* for all *j* having $x(j)$ equal to one.

The optimization problem in this case can be formulated as follows:

$$\text{Minimize} \sum_{j=1...k} C1^{*} SumRTT(j) * x(j) + C2^{*} SumNB(j) * x(j) + C3^{*} SumRPS(j) * x(j)$$

Subject to:

$$\text{SumRTT(j)} = \sum_{k \neq j} \left| RTT(j) - RTT(k) \right| + \sum_{p \neq q \neq j \forall p,q} \left| RTT(p) - RTT(q) \right|$$

$$\text{SumNB(j)} = \sum_{k \neq j} \left| NB(j) - NB(k) \right| + \sum_{p \neq q \neq j \forall p,q} \left| NB(p) - NB(q) \right|$$

$$\text{SumRPS (j)} = \sum_{k \neq j} \left| RTT(j) - RTT(k) \right| + \sum_{p \neq q \neq j \forall p,q} \left| RTT(p) - RTT(q) \right|$$

$\Sigma x(j) = 1$ for all values of *j*, $\Sigma x(j) \leq \Sigma \text{RPS}(j)$ for all values of *j*, all $x(j)$ can either be 0 or 1, and all RPS(*j*) can be integers from 0 to _ RPS(*j*) for all *j*.

As previously noted, the RPS(*j*) in this implementation are variables at the disposal of the load management switch 18.

For a relatively small number of input and output ports, the above optimization problem can be solved in a short time. For large number of ports, as in an ATM switch implementation, the following formulation can be effective in saving computation time.

Consider a switch with *n* ingress ports and $m(\leq n)$ egress ports. $C(i, j)$ is defined as the cost of sending a packet from the ith ingress port to the server connected to the *j*th egress port at a predefined time period. Then, the load

balancing problem can be stated as follows:

$$\text{Minimize} \qquad \sum_{i}^{n}\sum_{j}^{m} C(i,j) * X(i,j)$$

Subject to:

$$\sum_{i}^{n} X(i,j) = S$$

$$\sum_{i}^{n} C(i,j) = D$$

$$X(i,j) \in \{0,1\} \forall i,j$$

where S and D are the maximum number of packets that can be buffered at one ingress port and one egress port, respectively.

FIG. 5 shows an example of a particular implementation of a network server system 50 used to illustrate the operation of a load balancing process in accordance with the invention. The system 50 includes a set of clients 52, denoted Client 1, Client 2 and Client 3, and a server farm 54 comprising a set of servers, denoted Server 1, Server 2 and Server 3. Each of the clients 52 is connected to a port of a hub 55, while each of the servers 56 is connected to a port of a hub 56. The hubs 55 and 56 are further connected to network interface cards (NICs) of a load management switch 58. Another MC of the switch 58 is coupled to a source of department connectivity information. Also shown in FIG. 5 are IP addresses for the client 52, the hub-connected NICs of switch 58, and the servers 54. In the case of the servers 54, both unique and aliased IP addresses are shown.

Software code for implementing the above-described load balancing process is stored in a memory associated with or otherwise accessible to the switch 58. In this particular implementation, the switch 58 is assumed to be a switch of a type similar to a Cajun P550 switch from Lucent Technologies Inc. The switch may be, e.g., Linux-based, and the NICs thereof may be, e.g., peripheral component interconnect (PCI)-based 10/100Mbps Fast Ethernet NICs.

A first NIC of the switch 58, having IP address 10.10.10.9, is connected to the set of clients 52 through the hub 55. The set of clients 52 generates network service requests to advertised IP address-port combinations. The clients 52 are either Linux-based or Solaris-based, and all have unique IP addresses as shown. The first NIC and the set of clients 52 may be viewed as comprising a 10.10.10.xx network.

A second NIC of the switch 58, having IP address 193.238.0.9, is connected to the set of servers the server farm 54 through the hub 56. These servers and the second NIC on the switch 58 may be viewed as comprising a 192.238.0.xx network. Two of the servers in the server farm 54 are Solaris-based and one is IRIX-based.

It is important to note that apart from having unique IP addresses in the 192.238.0.xx network, the servers all share one or more aliased-IP addresses. These aliased-IP addresses are the ones advertised by the switch 58. Packets sent to these IP addresses are forwarded on to the selected server by the switch after the proper MAC address changes, as described in conjunction with FIG. 2, thereby allowing each server in the server farm 54 to receive uniquely any such packets.

The load management switch 58 may include one or more additional NICs for interfacing to other network elements. For example, as shown in FIG. 5, the switch 58 includes a third NIC for interfacing to other LANs, network devices, etc.

The particular arrangement of elements shown in FIG. 5 is by way of example only, and numerous other configurations may be used.

FIG. 6 shows in greater detail an exemplary implementation of the switch 58. As previously noted, this switch is of a type similar to the Cajun P550 switch from Lucent Technologies. It includes a fast path 60 implemented primarily in hardware and a slow path 62 implemented primarily in software. The fast path 60 includes a set of I/O switching buffers 63, a fast path table (FPT) 64 and a set of routing information 65. The I/O switching buffers 63 are coupled to

ingress and egress ports of the switch 58, and receive ingress/egress packets therefrom. The slow path includes a slow path table (SPT) 66, a balancing algorithm element 67, a server load assessment element 68, and a timer 69.

The rows of the FPT 64 contain routing information for already-established data flows. Associated with each row of the FPT 64 is a timer field which is initialized when the row is written. After the timer expires, information can be retrieved from the SPT 66. The entries in the FPT 64 may be established by firmware in the slow path 62.

As a new packet arrives in the switch 58 from either direction, the FPT 64 is searched for routing information. The keys, e.g., header fields, used for the FPT search are derived by the hardware from the newly arrived packet. A match indicates that routing information already exists for this connection and the packet is forwarded to the intended egress port. The timer for this entry in the FPT 64 is refreshed at this point. For a non-match, the packet is handed over to the slow path firmware.

The SPT 66 is a superset of the FPT 64. It contains all the information stored in the FPT and more, related to a particular data flow. Like the FPT, each SPT entry has a timer field which is initialized when the row is written. The expiry interval in the SPT is a function of the type of connection, e.g., FTP, HTTP, etc. The expiry is set at a slightly higher value than the allowed dormancy period for the connection. When a packet is received in the slow path 62, the SPT 66 is searched with keys extracted from the newly arrived packet. If a match is found, it indicates that the corresponding FPT entry has been purged due to its timer expiry. The slow path then re-establishes the entry in the FPT and allows the packet to be routed by the hardware. The timer entry in the SPT for this connection is also refreshed at this point.

If a match is not found in the SPT, it indicates that either it is an entirely new connection or the SPT entry has been purged due to slow path timer expiry. For both the cases, the slow path generates routing information using a suitable method. It then creates entries in the SPT 66 as well as the FPT 64. The packet is then routed accordingly by the hardware.

It should be noted that if the SPT entry has been purged due to timer expiry attributable to a long dormancy period of the corresponding connection, the server selected by the load balancing process may not be the one which was originally selected for this client. In that situation, the server may reject the connection automatically, forcing the client to re-initiate the session, and the entries in the SPT and FPT will eventually expire for the rejected connection.

The server load assessment element 68 of slow path 62 is responsible for collection of load assessment statistics which are used by the load balancing algorithm element 67 in implementing server selection. The timer 69 in the slow path 62 is responsible for establishing and purging timing fields in the FPT 64.

The manner in which the previously described load balancing processes can be implemented in the switch 58 of FIG. 6 will be readily apparent to those skilled in the art. Other switch architectures can also be used.

The processing of HTTP, FTP and multi-cast video-on-demand services in the system 50 of FIG. 5 will now be described in greater detail.

In the case of HTTP service, the clients 52 in FIG. 5 generate HTTP requests to an advertised IP address-port combination, which in this example is assumed to be IP address 192.238.0.50 and Port 80. As previously noted, this IP address corresponds to the aliased address of each of the servers in the server farm 54. The load management switch 58, using the FPT 64, SPT 66 and the load balancing processes previously described, selects a server from the server farm 54. It is important to note that the slow path 64 identifies the type of connection as an HTTP request from the well-known port number, and can therefore appropriately select a timer expiry value for the corresponding entry in the FPT 64. Irrespective of whether the connection request is an HTTP 1.1 (persistent) or HTTP 1.0 (non-persistent) request, the timer interval guarantees that any further requests generated from the same client will be directed to the same server. The switch 58 changes the source/destination MAC-addresses of the Ethernet frames, in the manner previously described in conjunction with FIG. 2, such that the packets can be picked up by the intended servers in the server farm 54.

The FTP service case needs to address not only the combination of the ftp-control port (20) and ftp-data port (21), but also scenarios in which clients change data ports for the same FTP connection. First, the switch 58 ensures that it can recognize the control port and data port connections from the same client. This is achieved in the slow path 62 by looking at the client's IP address for a TCP packet with the ftp-data port as the destination. The SPT 66 is searched for an entry from the same client with the ftp-control port as the destination. The same server selected by the load balancing algorithm for the control connection, is then selected for the data connection as well. Second, if the client's data port number changes during an FTP connection, the keys used for the FPT/SPT lookup ensure that packets from the FTP client with the newer data port are sent to the previously assigned server, i.e., to the correct selected server. It is therefore not necessary to perform a slow path update every time the client's data port changes for an ongoing FTP session. It has also been determined that multiple simultaneous FTP sessions from the set of clients 52 can be successfully balanced in a similar manner using the techniques of the invention.

In the case of multicast video-on-demand service, important factors are: (1) the isochronous nature, i.e., time sensitivity, of the resulting traffic, and (2) the multicast aspect of the service, where potentially many clients can send feedback/repair-request messages to the server farm. The isochronous nature of the traffic can be dealt with using

high-priority queuing, if the switch bandwidth is not sufficient for the forwarding of video packets with a desired minimum amount of delay.

At the IP level, the general structure of multicast packets remains unchanged. These packets are identified by a so-called class D IP address having its first "nibble" set to 1110, as described in D. Comer, "Internetworking With TCP/IP," Vol.1, Prentice-Hall, ISBN 0-13-468505-9, Englewood Cliffs, New Jersey, 1991, which is incorporated by reference herein. Thus, multicast IP packets have addresses ranging from 224.0.0.0 to 239.255.255.255.

As noted above, for an ongoing multicast video session from the server farm 54 to the set of clients 52, it is possible that rate-control or repair-request feedback messages will be sent from some of the clients in the group to the server farm. See, e.g., S. Floyd et al., "A Reliable Multicast Framework for Light-weight Sessions and Application Level Framing," Proceedings of SIGCOMM 95, pp. 342-356, 1995, and K. Nahrstedt et al., "Probe-based Algorithm for QoS Specification and Adaptation, Quality of Service - Description Modeling and Management, Proceedings of the 4th International IFIP Workshop on Quality of Service (IWQoS96), pp. 89-100, Paris, March 6-8, 1996, both of which are incorporated by reference herein. The IP packets of these feedback messages will contain the multicast IP address of the ongoing session. Using this field, the switch 58 can identify that the packet is from an ongoing session and not a new request to be balanced and can thereby forward the packet to the appropriate server.

The above HTTP, FTP and multicast video-on-demand cases are examples intended to illustrate the operation of the invention, and should not be construed as limiting the invention to any particular embodiment or group of embodiments. The invention can be implemented for network service requests of any type.

The load balancing of the present invention may be implemented in network server systems other than those in the exemplary embodiments described above. For example, as previously noted, the load balancing can be implemented in other network switches having different architectures. In addition, the load balancing can be implemented in other types of network elements, such as routers. As another example, the load balancing of the invention could be applied to a system in which servers of a given server farm are geographically distributed. These and numerous other alternative embodiments within the scope of the following claims will be readily apparent to those skilled in the art.

## Claims

1. A method of processing a client request received over a communication network, the method comprising the steps of:

   computing a value of an objective function for each of at least a subset of a plurality of related servers, the objective function being based at least in part on a determination as to the type of connections being serviced by the server at a particular time; and

   selecting a particular one of the servers for processing the request based at least in part on the computed objective function values.

2. The method of claim 1 wherein the plurality of servers are configured as a server farm in which the servers are each coupled to a common network.

3. The method of claim 1 wherein associated with each of the servers is a unique Internet Protocol (IP) address and a common shared IP address corresponding to an advertised address of the server farm.

4. The method of claim 1 wherein an IP address of a packet comprising at least a portion of the request is unmodified during delivery of the packet from the client to the selected one of the servers.

5. The method of claim 1 wherein a local network address of a packet comprising at least a portion of the request is modified so as to allow the packet to be delivered to the selected one of the servers.

6. The method of claim 5 wherein the local network address comprises an Ethernet media access control (MAC) address of a packet comprising at least a portion of the request is modified so as to allow the packet to be delivered to the selected one of the servers.

7. The method of claim 1 wherein the computing and selecting steps are implemented in a load management switch coupled between a client generating the request and the plurality of servers.

8. The method of claim 1 wherein the objective function for a given one of the servers includes terms based on

statistics collected for that server, the statistics including one or more of a number of active connections supported by the server, an amount of data throughput delivered by the server, a response time of the server, and one or more connection types associated with that server.

**9.** The method of claim 1 wherein the values of the objective function are computed at predetermined interval, such that a server selected based on the values of the objective function for the interval is used to service client requests received during that interval.

**10.** The method of claim 1 wherein the value of the objective function are computed for each of a plurality of client requests, such that each of the requests may be directed to a different one of the servers.

**11.** The method of claim 1 wherein the objective function includes a plurality of terms having dynamic weighting coefficients applied thereto, such that different load balancing policies can be implemented by adjusting the values of the dynamic weighting coefficients.

**12.** An apparatus for processing a client request received over a communication network, the apparatus comprising: a network element operative: (i) to compute a value of an objective function for each of at least a subset of a plurality of related servers, the objective function being based at least in part on a determination as to the type of connections being serviced by the server at a particular time; and (ii) to select a particular one of the servers for processing the request based at least in part on the computed objective function values.

**13.** The apparatus of claim 12 wherein the network element comprises a load management switch.

**14.** An apparatus for processing a client request received over a communication network, the apparatus comprising:

means for computing a value of an objective function for each of at least a subset of a plurality of related servers, the objective function being based at least in part on a determination as to the type of connections being serviced by the server at a particular time; and

means for selecting a particular one of the servers for processing the request based at least in part on the computed objective function values.

**15.** An article of manufacture comprising a machine-readable medium for storing one or more software programs for use in processing a client request received over a communication network, wherein the one or more programs when executed implement the steps of:

computing a value of an objective function for each of at least a subset of a plurality of related servers, the objective function being based at least in part on a determination as to the type of connections being serviced by the server at a particular time; and

selecting a particular one of the servers for processing the request based at least in part on the computed objective function values.

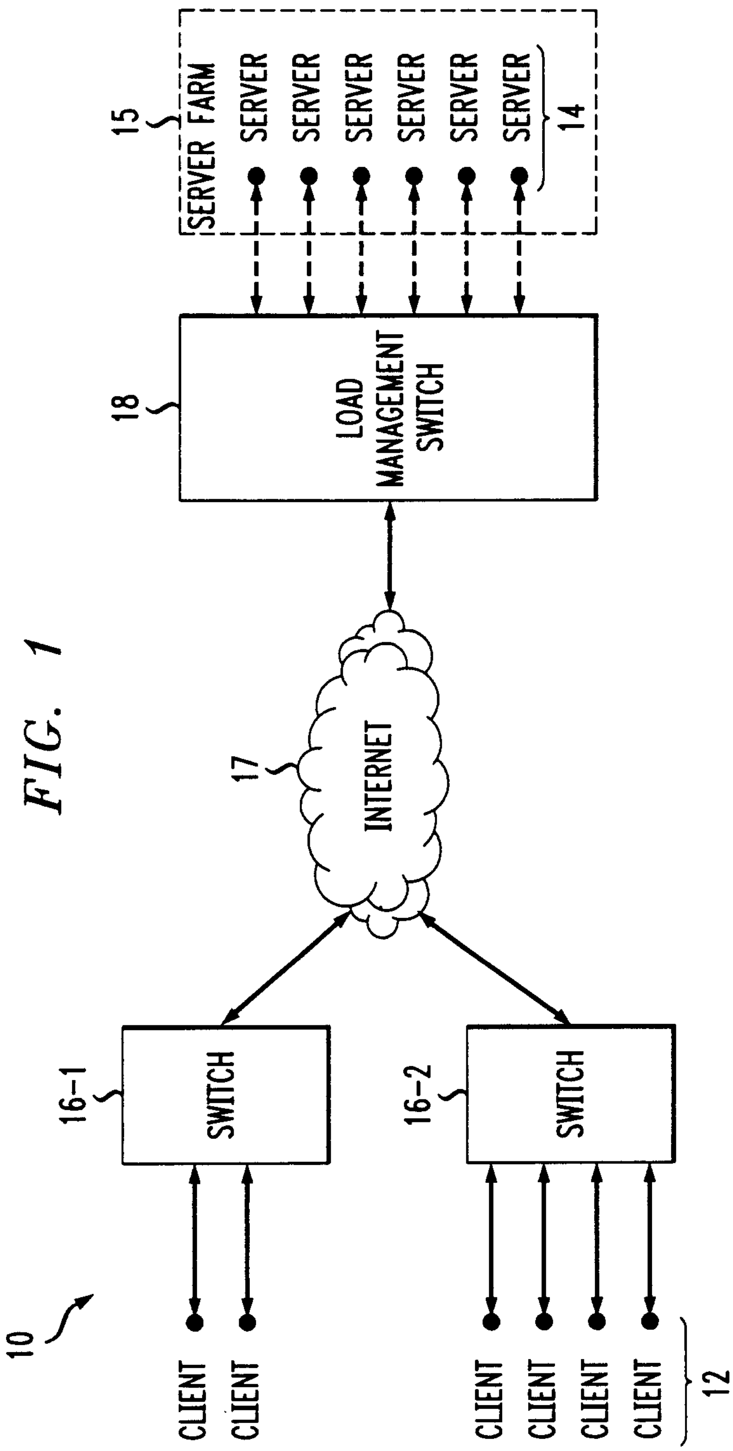
10
CLIENT
CLIENT
16-1
SWITCH
CLIENT
CLIENT
CLIENT
CLIENT
12
16-2
SWITCH
17
INTERNET
18
LOAD
MANAGEMENT
SWITCH
15
SERVER FARM
SERVER
SERVER
SERVER
SERVER
SERVER
SERVER
14

*FIG. 1*

FIG. 2

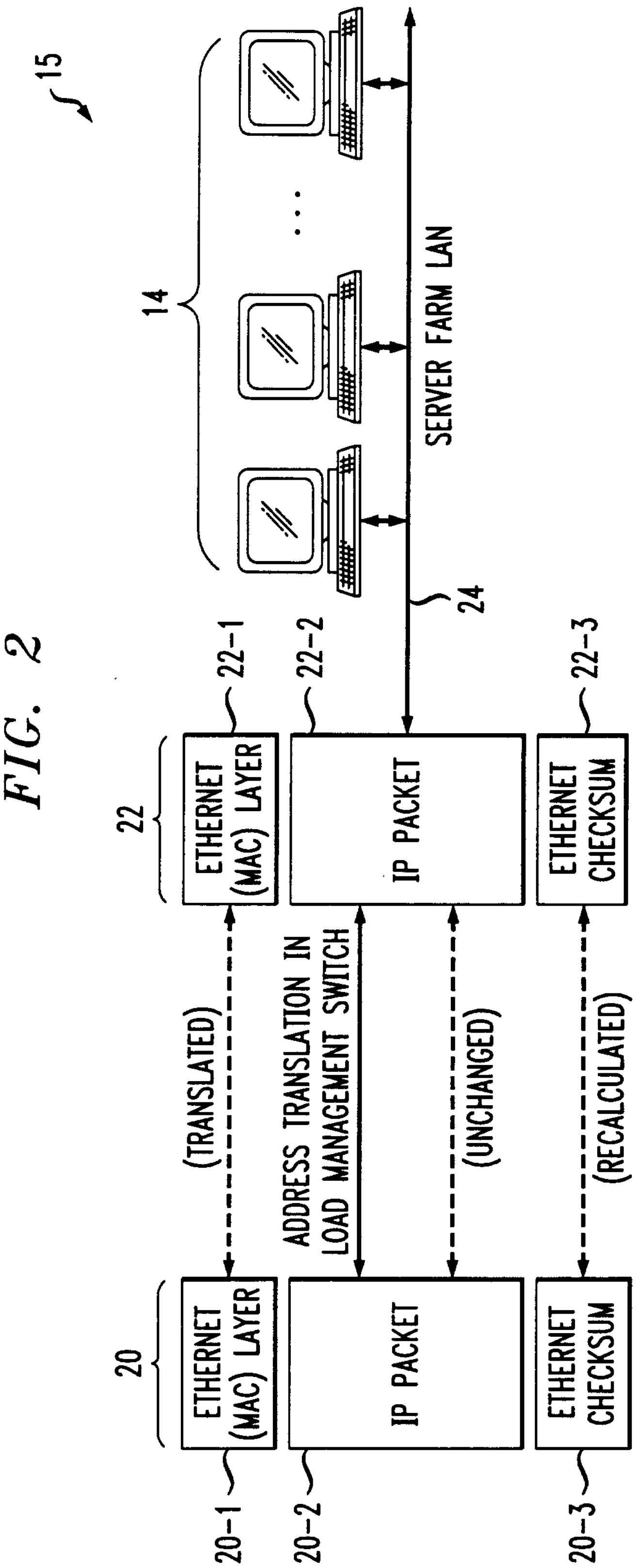
15
14
SERVER FARM LAN
24
22
22-1
22-2
22-3
ETHERNET (MAC) LAYER
IP PACKET
ETHERNET CHECKSUM
(TRANSLATED)
ADDRESS TRANSLATION IN LOAD MANAGEMENT SWITCH
(UNCHANGED)
(RECALCULATED)
20
ETHERNET (MAC) LAYER
IP PACKET
ETHERNET CHECKSUM
20-1
20-2
20-3

FIG. 3

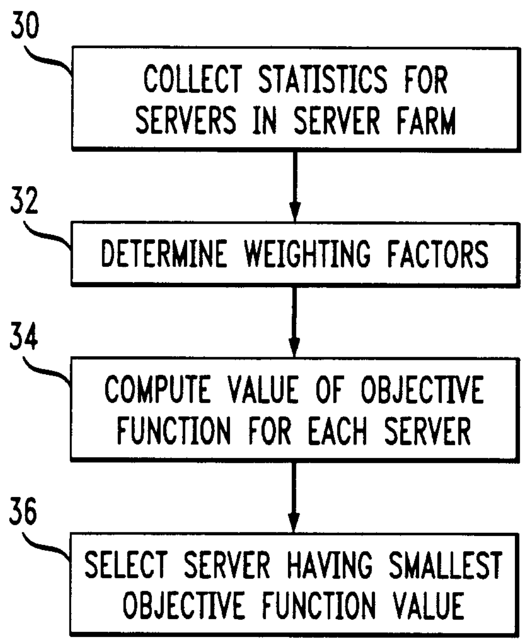
30
COLLECT STATISTICS FOR SERVERS IN SERVER FARM
32
DETERMINE WEIGHTING FACTORS
34
COMPUTE VALUE OF OBJECTIVE FUNCTION FOR EACH SERVER
36
SELECT SERVER HAVING SMALLEST OBJECTIVE FUNCTION VALUE

FIG. 4

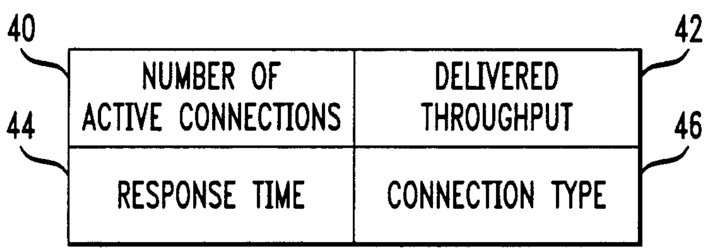
40
42
NUMBER OF ACTIVE CONNECTIONS
DELIVERED THROUGHPUT
44
46
RESPONSE TIME
CONNECTION TYPE

*FIG. 5*

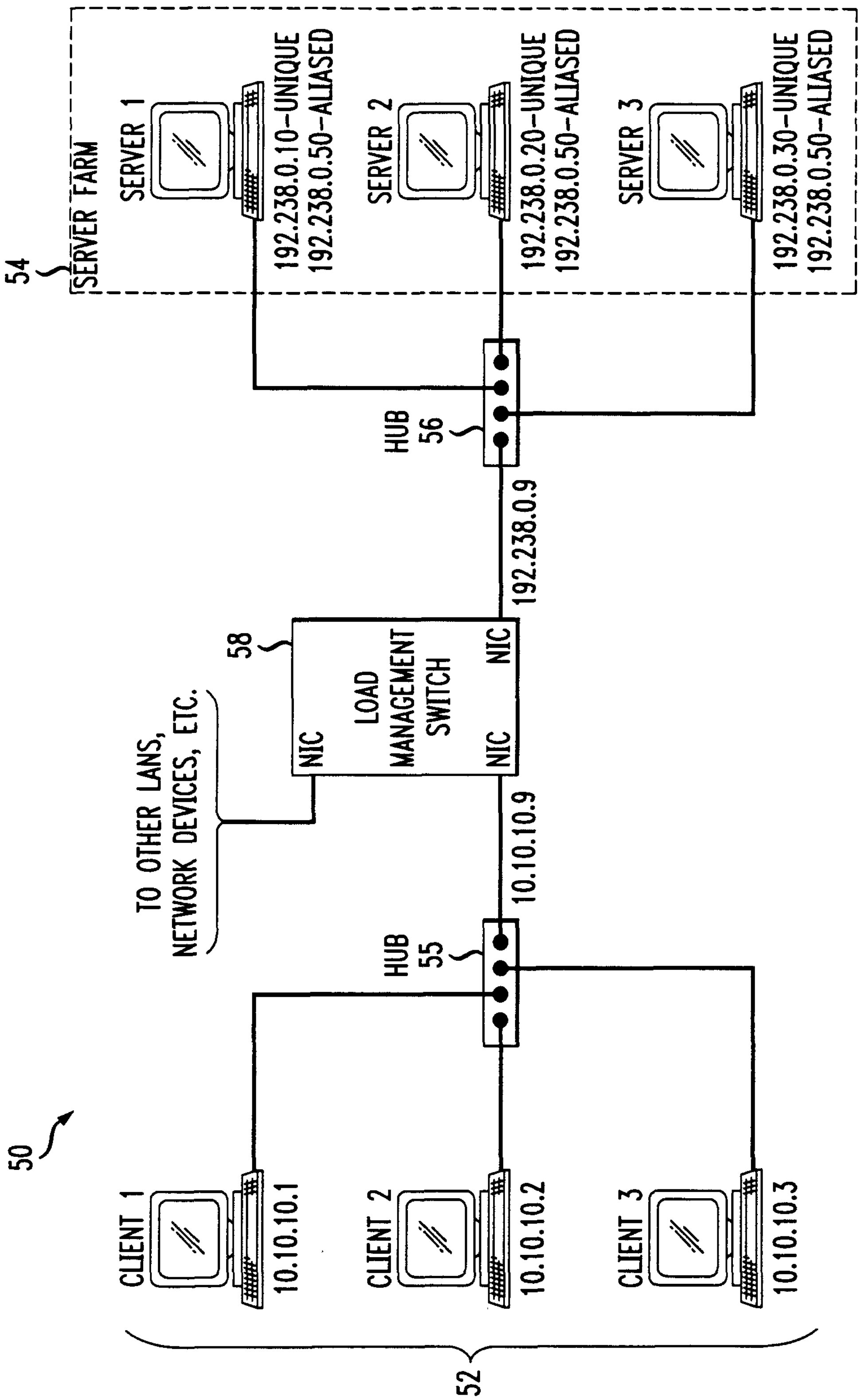
54
SERVER FARM
SERVER 1
192.238.0.10–UNIQUE
192.238.0.50–ALIASED
SERVER 2
192.238.0.20–UNIQUE
192.238.0.50–ALIASED
SERVER 3
192.238.0.30–UNIQUE
192.238.0.50–ALIASED
HUB
56
192.238.0.9
58
LOAD
MANAGEMENT
SWITCH
NIC
NIC
NIC
TO OTHER LANS,
NETWORK DEVICES, ETC.
10.10.10.9
HUB
55
50
CLIENT 1
10.10.10.1
CLIENT 2
10.10.10.2
CLIENT 3
10.10.10.3
52

*FIG. 6*

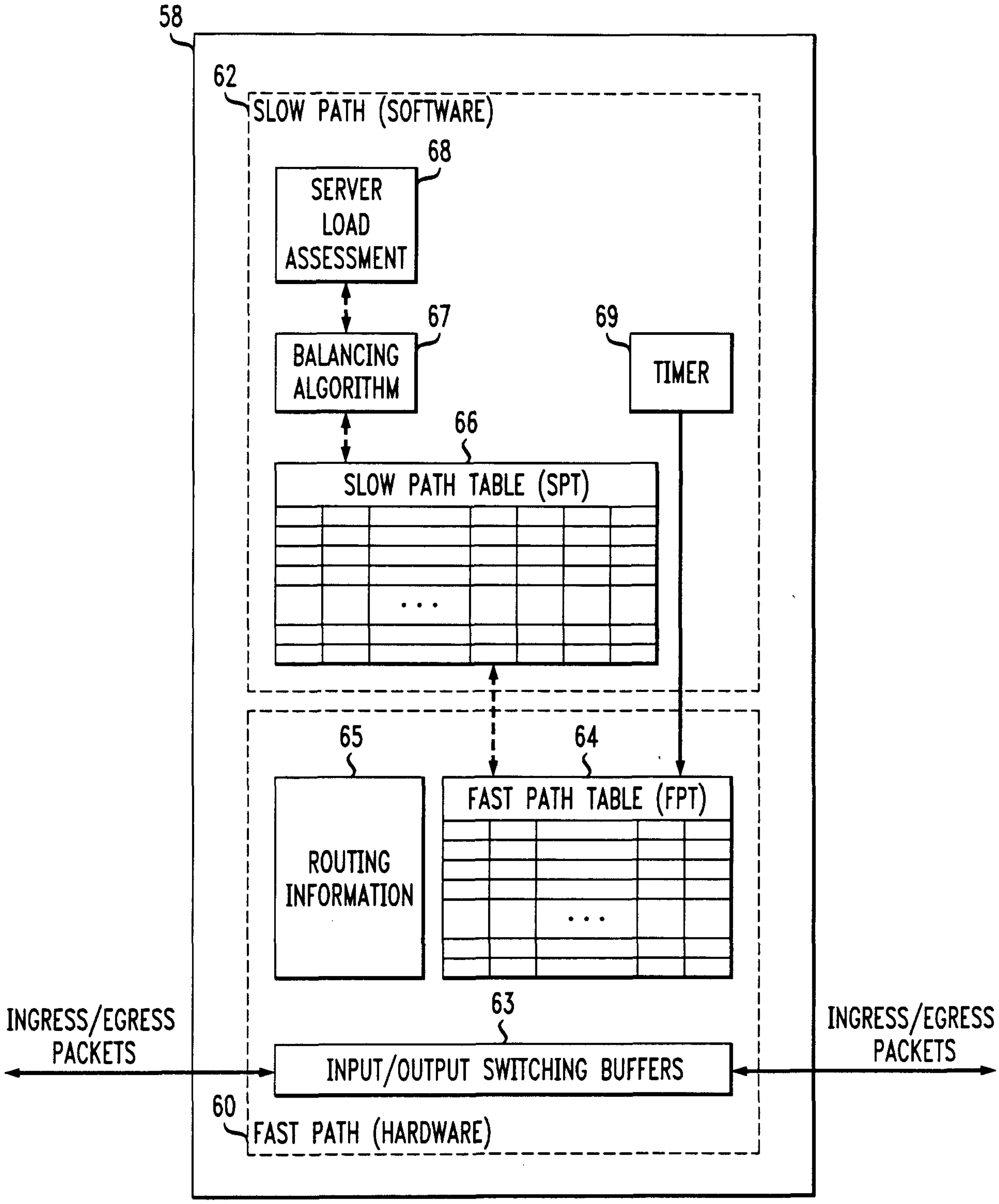
58
62
SLOW PATH (SOFTWARE)
68
SERVER LOAD ASSESSMENT
67
BALANCING ALGORITHM
69
TIMER
66
SLOW PATH TABLE (SPT)
65
64
ROUTING INFORMATION
FAST PATH TABLE (FPT)
63
INGRESS/EGRESS PACKETS
INPUT/OUTPUT SWITCHING BUFFERS
INGRESS/EGRESS PACKETS
60
FAST PATH (HARDWARE)